# EUROPÄISCHE PATENTANMELDUNG

(11) **EP 2 093 772 A2**
(43) Veröffentlichungstag der Anmeldung: **26.08.2009**
(21) Anmeldenummer: 09000641.2
(22) Anmeldetag: 19.01.2009
(51) Int. Cl.: G21D 3/14

(54) **Verfahren zur Steuerung eines Leichtwasserreaktors sowie nach diesem Verfahren betriebener Leichtwasserreaktor**

(30) Priorität: 25.01.2008 DE 102008006254
(71) Anmelder: Areva NP GmbH, 91052 Erlangen (DE)
(72) Erfinder: Morokhovskyi, Victor, Dr.rer.nat., 91056 Erlangen (DE); Scheiper, Dieter, 91058 Erlangen (DE)
(74) Vertreter: Walkenhorst, Andreas

(57) **Zusammenfassung**

Die Erfindung betrifft ein Verfahren zur Steuerung eines Leichtwasserreaktors, der einen Reaktordruckbehälter und eine damit gekoppelte Dampfturbine mit einer Umleitstation zur Beeinflussung der Anströmverhältnisse wenigstens eines innerhalb eines Radraumes angeordneten Turbinenrades aufweist. Das Verfahren ist gekennzeichnet durch die Bildung einer Stellgröße für die steuerbare Umleitstation aus dem Druck innerhalb des Radraumes der Dampfturbine.

Die Erfindung betrifft weiterhin einen Leichtwasserreaktor mit einem Reaktordruckbehälter und einer damit gekoppelten Dampfturbine, und mit einer Umleitstation zur Beeinflussung der Anströmverhältnisse wenigstens eines innerhalb eines Radraumes angeordneten Turbinenrades. Im Reaktor ist eine Steuerung mit einer Koppelung zwischen einem Druck innerhalb des Radraumes und einem Einstellwert für die steuerbare Umleitstation vorgesehen.

## Beschreibung

Die vorliegende Erfindung betrifft ein Verfahren zur Steuerung eines Leichtwasserreaktors sowie einen derartigen Leichtwasserreaktor.

Der Umlauf von Kernkühlmittel, insbesondere Kühlwasser in einem Leichtwasserreaktor, bspw. in einem Siedewasserreaktor oder einem Druckwasserreaktor, kann auf unterschiedliche Arten erfolgen. Bei einem Naturumlaufreaktor wird das Kühlmittel aufgrund einer Dichtedifferenz zwischen dem in dem Reaktorkern befindlichen Kühlmittel und dem in einem außerhalb des Reaktorkerns befindlichen Rückströmraum vorhandenen Kühlmittel in einem Naturumlauf gehalten. Innerhalb des Reaktorkerns ist das Kühlmittel wärmer als innerhalb des Rückströmraums und einem Siedewasserreaktor durch Dampfblasenbildung zudem wesentlich leichter. Bei Leichtwasserreaktoren mit einem sogenannten Zwangsumlauf des Kernkühlmittels sind Umwälzpumpen vorgesehen, die durch ihre Pumpwirkung ein Durchströmen des Reaktorkerns und somit eine Kühlung desselben bewirken. Durch Steuerung der Umwälzpumpen kann unabhängig von der Lage von in den Reaktorkern eingefahrenen Steuerelementen der Kernkühlmitteldurchsatz eingestellt werden. Diese unabhängige Einstellung des Kernkühlmitteldurchsatzes ermöglicht ein günstiges Betriebsverhalten des Leichtwasserreaktors, insbesondere auch bei der Beherrschung von nicht regulären Betriebszuständen.

Zur schnellen Änderung und Reduzierung einer Reaktorleistung eines Leichtwasserreaktors ist es wünschenswert, den Kernkühlmitteldurchsatz schnell, umkehrbar und mit einfachen Mitteln veränderbar zu machen. Diese Leistungsänderungen sollen nach Möglichkeit unabhängig von einer Regelung der Reaktorleistung durch das Einfahren von Steuerstäben in den Reaktorkern durchgeführt werden können.

Die DE 195 43 827 C1 beschreibt einen Leichtwasserreaktor mit einem Reaktordruckbehälter, einem Reaktorkern und einem den Reaktorkern umschließenden Kernmantel, wobei der Kernmantel mindestens eine Eintrittsöffnung und eine Austrittsöffnung für Kernkühlmittel hat. Der Austrittsöffnung ist ein Strömungsquerschnitt zugeordnet; zudem weist sie zumindest ein Drosselelement auf, das geodätisch oberhalb des Reaktorkerns angeordnet ist. Mittels des Drosselelements kann der Strömungsquerschnitt zur Regelung des Kernkühlmitteldurchsatzes verändert werden. Durch diese Veränderbarkeit des Strömungsquerschnittes, durch den das den Reaktorkern durchströmende, aufgeheizte Kühlwasser strömt, soll eine schnelle und umkehrbare Veränderung der Reaktorleistung ermöglicht werden, insbesondere eine Reduzierung der Reaktorleistung.

Die Umleitstation in einem Siedewasserkernkraftwerk wird üblicherweise vom Reaktordruckregler gesteuert. Der Reaktordruckregler hat die Aufgabe, den Reaktordruck auf einem festen Sollwert zu halten. Er regelt zu diesem Zweck den Reaktordruck bei langsamen Anlagentransienten aus. Bei schnellen Anlagentransienten, wie z.B. Lastabwurf auf Eigenbedarf, Turbinenschnellabschaltung, etc. kann der Reaktordruckregler den Druck normalerweise nicht mit einer ausreichenden Reaktionsgeschwindigkeit ausregeln, was zu größeren Druckabweichungen im Reaktordruckbehälter führen kann. Dabei können unter Umständen die Grenzwerten des Reaktorschutzes erreicht werden. Daher ist für die Umleitstation eine Vorsteuerung erforderlich, die dafür sorgt, dass schnelle Dampfdurchsatzänderungen an der Turbine durch die Umleitstation kompensiert werden können.

Bei Siedewasserreaktoren ist der Frischdampf von der Turbine bis auf strömungsbedingte Druckabfälle in den Dampfleitungen gleich dem Reaktordruck, so dass der Konstanthaltung des Reaktordruckes besondere Bedeutung zukommt. Man erreicht dadurch einen konstanten Dampfblasengehalt im Reaktorkern und damit weitgehend gleichbleibende Reaktivität und Leistungserzeugung, eine Reduzierung des Auftretens von Materialermüdungen im Reaktordruckbehälter (RDB), sowie einen unveränderlichen, linearen Zusammenhang zwischen einer Ventilöffnungsstellung und dem zugehörigen Dampfmassenstrom.

Als Stellglieder verwendet die Reaktordruckregelung normalerweise die Regelventile der Turbine sowie die sog. Umleitventile. Bei der Ansteuerung der Turbinenregelventile konkurriert sie mit der Turbinenregelung, über welche die Turbinenleistung und/oder die Turbinendrehzahl geregelt wird. Die Reaktordruckregelung sowie die Umleit- und Turbinenregelung können nicht als unabhängige Regelkreise betrachtet werden. Erst durch ihr Zusammenwirken wird der korrekte Betrieb der Anlage ermöglicht. Dabei wird von der Druckregelung ein Öffnungssollwert an die unterlagerten Stellungsregelkreise der Turbinen- und Umleitventile vorgegeben. In Abhängigkeit vom Öffnungssollwert öffnen zunächst die Turbinenventile, jedoch nur so weit, bis die Leistungs- bzw. Drehzahlregelung der Turbine über eine Minimum-Auswahl übernimmt. Erst danach öffnen die Umleitventile, bis die zur Konstanthaltung des Reaktordruckes notwendige Öffnungsfläche erreicht ist. Im Normalbetneb sind die Umleitventile geschlossen und die Reaktorleistung wird über die Regelung der Axialpumpen und der Stäbe der von der Turbine angeforderten Leistung nachgefahren. Erst bei einer schnellen Reduzierung der Last, dem sog. Lastabwurf oder Turbinenschnellschluß werden die Umleitventile geöffnet, um den überschüssigen Dampf abzuleiten.

Bei bekannten Siedewasserreaktoren werden die Vorkolbenstellungen der Turbinenventile als Maß für den Dampfdurchsatz durch die Turbine genommen. Der Nachteil dieser Methode liegt darin, dass es keinen festen Zusammenhang zwischen den Vorkolbenstellungen und dem Dampfdurchsatz gibt. Dieser Zusammenhang ist von mehreren Einstellungen in Hydraulik, Mechanik und Elektronik abhängig. Er wird weiterhin von Ölparametern (Druck, Temperatur, Verschmutzung) und von dem Verschleiß der Mechanik sowie von möglichen Störungen in der Hydraulik, Mechanik und Elektronik beeinflusst.

Der Erfindung liegt daher die Aufgabe zu Grunde, einen Leichtwasserreaktor sowie ein Verfahren zu dessen Betrieb zur Verfügung zu stellen, bei denen mittels verbesserter Vorsteuerung eine reaktionsschnelle Reaktorsteuerung ermöglicht ist, und die die genannten Nachteile nicht mehr enthält.

Diese Aufgabe wird erfindungsgemäß gelöst durch eine neuartige Vorsteuerung der Umleitstation in Siedewasser- bzw. Leitwasserreaktoren unter Nutzung des Radraumdrucks. Der Gegenstand der Erfindung liegt in der Nutzung des Radraumdruckes (Druck vor der ersten Hochdruckstufe der Turbine) als Maß für den Dampfdurchsatz durch die Turbine. Unabhängig vom Frischdampfdruck gibt es einen festen Zusammenhang zwischen dem Radraumdruck und dem Dampfdurchsatz durch die Turbine. Dieser Zusammenhang ist weitgehend unabhängig von weiteren Einflussfaktoren des Reaktorbetriebes. Somit kann mittels des erfindungsgemäßen Verfahrens die Sicherheit und die Verfügbarkeit der Anlage verbessert werden.

Die Erfindung liefert ein neues Kriterium für die Vorsteuerung der Umleitstation. Anstelle der Vorkolbenstellung der Turbinenventile wird der Radraumdruck als Kriterium für den Dampfdurchsatz durch die Turbine für die Vorsteuerung der Umleitstation verwendet. Es wird damit ein verbesserter Umleitregler für Leicht- und Siedewasserreaktoren zur Verfügung gestellt, der eine bessere Verfügbarkeit und Sicherheit für Siedewasserreaktoren bietet.

Das erfindungsgemäße Verfahren zur Steuerung eines Leichtwasserreaktors, der einen Reaktordruckbehälter und eine damit gekoppelte Dampfturbine mit einer Umleitstation, ist gekennzeichnet durch die Bildung einer Stellgröße für die steuerbare Umleitstation aus dem Druck innerhalb des Radraumes der Dampfturbine. Dabei werden die Druckverhältnisse im Radraum zur Bildung einer Stellgröße für die steuerbare Umleitstation verwendet. Auf diese Weise wird eine leicht beherrschbare und sehr zuverlässige Umleitsteuerung ermöglicht, welche die erwähnten Nachteile der bekannten Steuerungsverfahren vermeiden kann.

Vorteilhafterweise wird für die Umleitregelung als Eingangsgröße ein Sollwert für den Reaktordruck verwendet wird, der in zwei gekoppelten Regelkreisen geregelt wird. Hierbei kann insbesondere ein Ventilöffnungswert innerhalb der Umleitregelung aus dem Drucksollwert für den Reaktor aus dem gemessenen Druck ermittelt werden. In einen zweiten Regelkreis dient der Radraumdruck als Vorsteuergröße.

Die vorliegende Erfindung umfasst weiterhin einen Leichtwasserreaktor mit einem Reaktordruckbehälter und einer damit gekoppelten Dampfturbine, und mit einer Umleitstation, die eine Steuerung aufweist, die eine Koppelung zwischen einem Druck innerhalb des Radraumes und einem Einstellwert für die steuerbare Umleitstation vorsieht. Der Leichtwasserreaktor ist insbesondere mit einem Verfahren entsprechend einer der zuvor beschriebenen Ausführungsvarianten betreibbar.

Ein Ausführungsbeispiel der Erfindung wird anhand einer Zeichnung näher erläutert. Darin zeigen:
Fig. 1 eine schematische Darstellung der Struktur einer erfindungsgemäßen Umleitregelung.
Fig. 2 ein Regelschema zur Verdeutlichung des Zusammenhangs zwischen der regelungstechnischen Koppelung zwischen dem Druck innerhalb des Radraums und einem Einstellwert für die steuerbare Umleitstation,
Fig. 3 ein Blockschaltbild eines Druckregelkreises eines Leichtwasserreaktors.
Fig. 4 ein Blockschaltbild eines Betriebsventilstellungsregelkreises,
Fig. 5 ein Blockschaltbild eines Stellungsregelkreises und
Fig. 6 ein Diagramm zur Darstellung einer Sprungantwort eines Druckreglers.

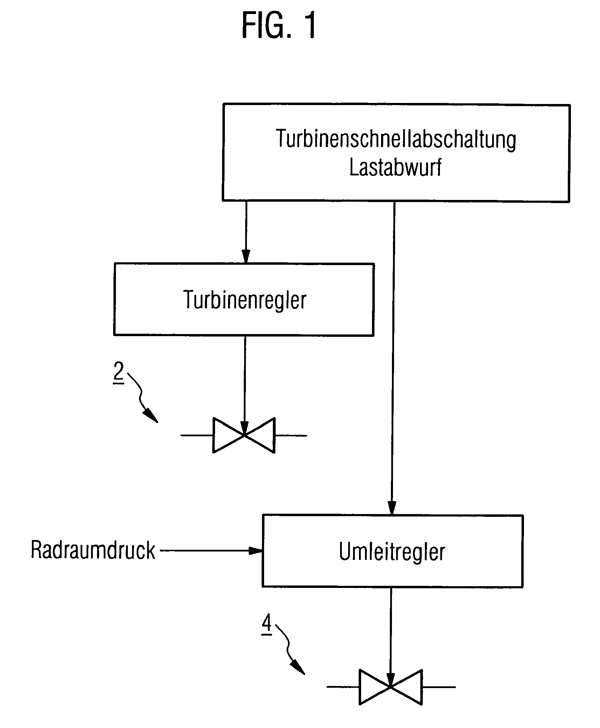

Die Fig. 1 zeigt eine schematische Darstellung der Struktur einer erfindungsgemäßen Umleitregelung, die sich gegenüber bisher verwendeten Regelungsprinzipien durch Einbeziehung des Radraumdrucks als Steuergröße unterscheidet. Während bekannte Regelungen bei einer Turbinenschnellabschaltung mit gleichzeitigem Lastabwurf über einen Turbinenregler das Turbinenstellventil ansteuern, wonach aus einem Flächenvergleich über den Umleitregler ein Umleitstellventil angesteuert wird, sieht die erfindungsgemäße Regelung gemäß Fig. 1 bei einer Turbinenschnellabschaltung mit gleichzeitigem Lastabwurf eine gleichzeitige Ansteuerung des Turbinenreglers und des Umleitreglers vor. Während der Turbinenregler das Turbinenstellventil 2 ansteuert, wird als weitere Eingangsgröße für den Umleitregler der Radraumdruck verwendet. Mit dem Umleitregler wird schließlich das Umleitstellventil 4 angesteuert.

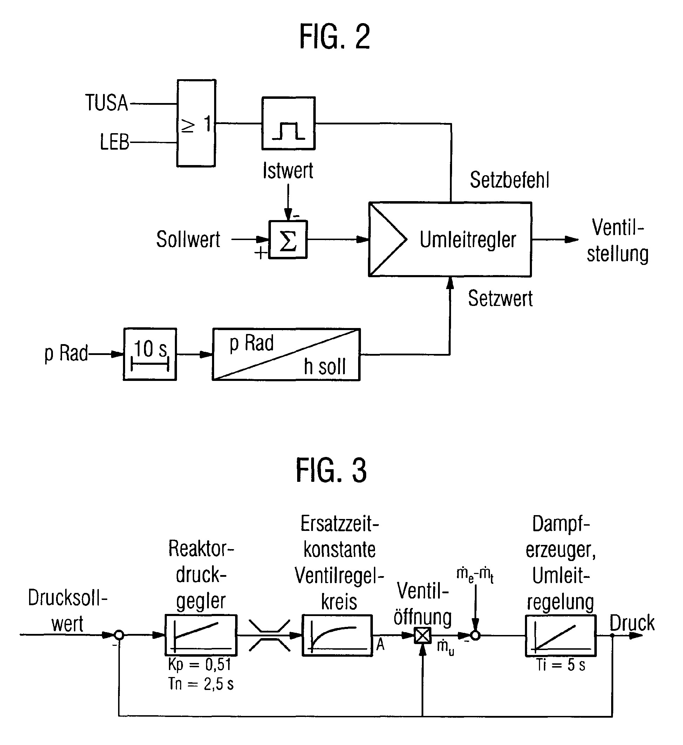

Die schematische Darstellung der Fig. 2 zeigt ein Regelschema zur Verdeutlichung des Zusammenhangs zwischen der regelungstechnischen Koppelung zwischen dem Druck innerhalb des Radraums und einem Einstellwert für die steuerbare Umleitstation. Bei einer Turbinenschnellabschaltung (TUSA) und gleichzeitigem Lastabwurf bei Eigenbedarf (LEB) wird ein Setzbefehl als Stellsignal für den Umleitregler generiert. Aus den ermittelten Werten für den Radraumdruck wird ein Setzwert für den Umleitregler erzeugt. Aus den beiden Eingangsgrößen sowie aus einem Soll-/Istwert-Signal wird schließlich ein Ventilstellungssignal für die Ansteuerung des Umleitstellventils gebildet.

Die schematische Darstellung der Fig. 3 zeigt ein Blockschaltbild eines Druckregelkreises einer Variante eines erfindungsgemäßen Leichtwasserreaktors. Die Aufgabenstellung des Reaktordruckreglers entsprechend den regelungstechnischen Anforderungen kann in einem digitalen Konzept am ehesten mittels eines PID-Reglers realisiert werden. Eine sinnvolle Abtastzeit kann bei einer derartig zeitlich und regelungstechnisch anspruchsvollen Regelung ein Wert von ca. 10 ms angesetzt werden.

Überschreitet der vom Reaktor erzeugte Dampfstrom den von der Turbine aufgenommene Dampfstrom, so wird der Überschuss an Dampf über die Umleitstation abgeführt. Die Regelung hierfür, die sog. Umleitregelung, hat im gezeigten Ausführungsbeispiel die Struktur einer Kaskadenregelung mit zwei Regelkreisen, bei der in einem inneren, schnellen Regelkreis die Stellung der Umleitventile auf einen Stellungssollwert eingestellt wird, den ein überlagerter Druckregelkreis vorgibt (vgl. Fig. 3).

Bei einer solchen Umleitsteuerung können mehrere, bspw. insgesamt acht Umleitventile zum Einsatz kommen. Die gesamte Öffnungsfläche dieser acht Umleitventile richtet sich nach der Dimensionierung des Reaktors und des berechneten maximalen Dampfvolumenstroms. Die Ansteuerung der Ventile erfolgt zweckmäßigerweise gestaffelt in mehreren Gruppen, bspw. in vier Gruppen, oder über einen gemeinsamen hydraulischen Hilfskanal. Die Ventilgruppe, die sich aufgrund der Staffelung zuletzt öffnen würde, ist hydraulisch blockiert, so dass nur sechs Ventile im Eingriff sind.

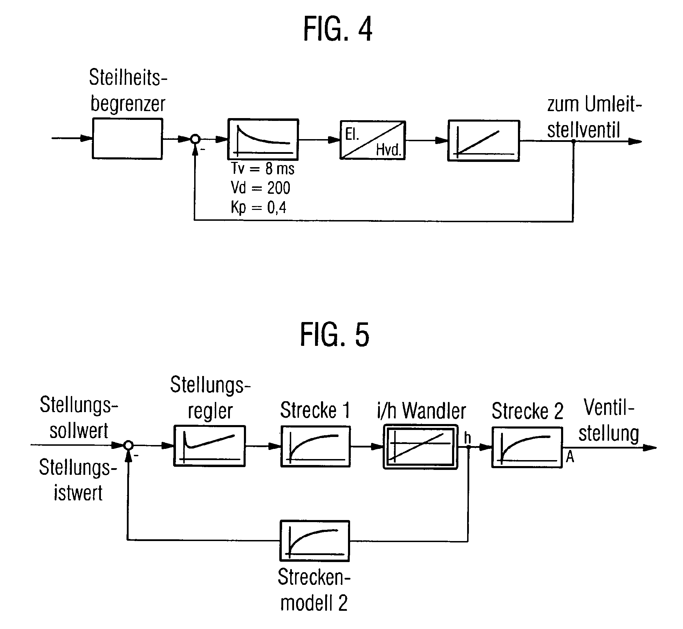

Anhand der folgenden Darstellungen soll das Verhalten der Regelkreise analysiert werden. Anhand der schematischen Darstellung der Fig. 4, die ein Blockschaltbild eines Betriebsventilstellungsregelkreises zeigt, wird die Struktur und das Regelverhalten des Betriebsventilstellungsregelkreises verdeutlicht. Die parallel ansteuerten Umleitstellventile werden untereinander auf Stellungsabweichungen überwacht. Weichen die Stellungen der parallel betriebenen Ventile stationär um einen Wert größer als 15% (bezogen auf den Öffnungs-Istwert) voneinander ab, so wird auf den hydraulischen Hilfskanal umgeschaltet.

Die Öffnungssollwerte lassen sich aus einer Differenz der vom Druckregler geforderten Öffnungsfläche und dem an der Turbine eingestellten Öffnungs-Isstwert errechnen. Als Maß für diesen Öffnungs-Istwert kann das Minimum der Signale "Stellungsistwert der elektrohydraulischen Umformer" der Turbinenstellventile und dem Sollwert für die Stellungsregelkreise der Turbinenventile hergeleitet werden. Diese Signalbildung berücksichtigt die Verzögerungen im Stellungsregelkreis der Turbinenventile. Um ein vorübergehendes Öffnen der Umleitventile zu vermeiden, wird ein Konstantsignal auf die Istwerte der Stellungsignale der Turbinenventile addiert. Als Öffnungs-Istwert kann insbesondere der Hub der Vorsteuerkolben in den Ventilantrieben verwendet werden. Das Ausgangssignal der elektrischen Öffnungsregler steuert anschließend die Aktoren bzw. die Spulen der Servoventile an.

Der Stellungsregelkreis weist eine hohe Dynamik auf, die erst bei großen Sollwerthüben durch die begrenzte Verstellgeschwindigkeit der Ventile eingeschränkt wird. Die Einschwingvorgänge zeigen eine ausgeprägte Dämpfung. Auch bei Variation der Streckenparameter innerhalb gewisser Grenzen wird der Endwert ohne Überschwingen erreicht.

Das Regelverhalten im hydraulischen Hilfskanal wird anhand der schematischen Darstellung der Fig. 5 verdeutlicht, die anhand eines Blockschaltbildes die Struktur eines Stellungsregelkreises im gemeinsamen hydraulischen Hilfskanal zeigt. Neben dem PID-Stellungsregler umfasst der Regelkreis die eigentliche Regelstrecke sowie ein Modell eines Streckenteils im Rückführzweig.

Diese Strecke teilt sich in zwei dynamische Anteile, nämlich in das Übertragungsverhalten vom Ausgang des Stellungsreglers zur Auslenkung des Kraftkolbens h des elektrohydraulischen Wandlers (Strecke 1 inklusive der i/h-Kennlinie) und in das Übertragungsverhalten von der Kraftkolbenstellung zur Ventilstellung A (Strecke 2). Die Kennlinie des Wandlers beeinflusst das dynamische Verhalten der Regelung nur unwesentlich, da ihre differentielle Verstärkung etwa 1 beträgt.

Um die Unsicherheiten bei der Messung der Ventilstellung zu vermeiden, wird als Öffnungs-Istwert der Maximalwert aus zwei Stellungsmessungen des Hubes des Kraftkolbens am elektrohydraulischen Umformer verwendet. Das Ausgangssignal des Reglers steuert die Tauchspule des elektrohydraulischen Umformers an.

Die Dynamik des Stellungsregelkreises im Hilfskanal ist geringer als die des Betriebsventilstellungsregelkreises. Die Einschwingvorgänge zeigen gute Dämpfungwerte, so dass auch bei Variation der Streckenparameter innerhalb gewisser Grenzen der Endwert ohne nennenswertes Überschwingen erreicht wird. Trotz des integralen Verhaltens des Reglers kann die stationäre Genauigkeit der Regelung nicht gewährleistet werden, da sich ein Teil der Strecke außerhalb des geschlossenen Kreises befindet (Steuerung). Wegen der überlagerten Druckregelung ist dies jedoch ohne Bedeutung.

Die Kriterien für eine Umschaltung auf den hydraulischen Hilfskanal werden nachfolgend beschrieben. Anstelle der Betriebsventilstellungsregler können alle Ventile auch über den elektrohydraulischen Hilfskanal gefahren werden. Die hydraulisch realisierte Umschaltung weist jedoch keine ausreichende Zuverlässigkeit auf. Eine Schutzauslösung infolge unpräziser Umschaltung kann deshalb nicht ausgeschlossen werden.

Nachfolgend wird nochmals auf den Druckregelkreis (vgl. Fig. 3) Bezug genommen. Die Druckregelung, die den Stellungsregelkreis umschließt, ist in Fig. 3 dargestellt. In einem Dampfspeicher (Rohrleitungen etc.) wird der resultierende Dampfmassenstrom zum Dampfdruck integriert. Nach Modelluntersuchungen und Analyse von durchgeführten Messungen errechnet sich eine sinnvolle Integrationszeitkonstante von etwa 5 Sekunden für den auf den Nennwert normierten Druck. Durch Multiplikation der Werte für die Ventilöffnung und den Druck errechnet sich der normierte Dampfmassenstrom der Umleitregelung.

Für die Auslegung des Druckreglers kann der Stellungsregelkreis zu einem Ersatzglied zusammengefasst werden. Durch die Multiplikation wird die Strecke nichtlinear, so dass Abweichungen der Strecke vom nominellen Modell berücksichtigt werden müssen. Der normierte Druck bewegt sich jedoch im Betrieb in engen Grenzen (etwa 1..1,4).

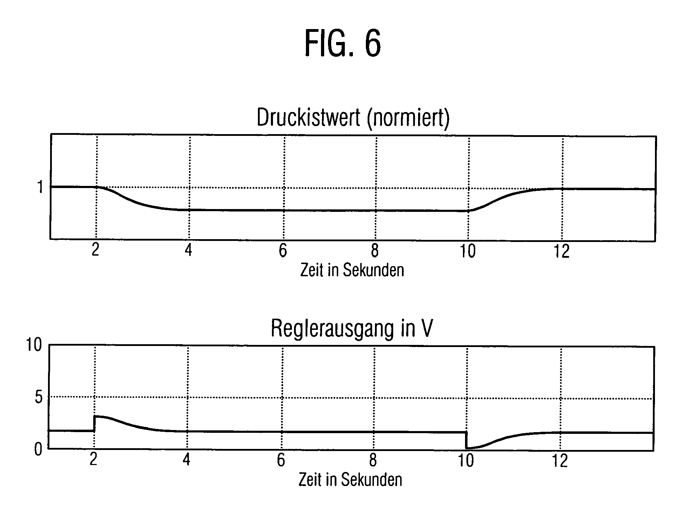

Im Zusammenhang mit den Versuchen des Ausführungsbeispiels wurde weiterhin der vollständige Druckregelkreis inclusive Steilungsregelkreis mit Hilfe einer numerischen Simulation untersucht (vgl. Fig. 6). Durch das Abschalten von zwei Ventilgruppen wird die Verstärkung der Kreisübertragungsfunktion auf ein Drittel verringert. Dieser Fall muss zwar von der Regelung beherrscht werden, für die Einstellung des Reglers sollte allerdings mit drei Ventilgruppen gearbeitet werden, da kritische Eigenschaften typischerweise bei hohen Verstärkungen auftreten. Für die integrierende Strecke wurde als Regler ein PI-Regler ausgewählt. Während für Führungsanregungen ein P-Regler ausreichend wäre, können Störgrößen mit stationären Anteilen nur durch den zusätzlichen I-Anteil ausgeregelt werden. Durch die doppelte Integration ergibt sich allerdings ein System höherer Ordnung, bei dem ein Überschwingen der Ausgangsgrößen auftreten kann. Mit den eingestellten Reglerparametern ergibt sich jedoch gutes Einschwingverhalten bei allen untersuchten Betriebsbereichen.

Die Digitalisierung der Messwerte wird nachfolgend näher erläutert. Bei der Diskretisierung von analogen Reglern ist die Wahl der Abtastzeit T_{A} von entscheidender Bedeutung. Ein Mindestkriterium gibt das Shannonsche Abtasttheorem, das besagt, dass die Abtastfrequenz mindestens doppelt so hoch sein muss wie die maximale im abzutastenden System vorkommende Eigenfrequenz. Bei Einhaltung des Abtagstheorems werden bei der Digitalisierung der Istwerte keine Aliasing-Fehler gemacht. Allgemein soll jedoch meist die höhere Anforderung erfüllt werden, dass der mit einem digitalen Regler geschlossene Kreis keine nennenswerte Verschlechterung im dynamischen Verhalten aufweist, als mit einem analogen Relger. Hierzu gibt es eine Vielzahl von überschlägigen Regeln. Eine oft bevorzugte Regel kann bspw. darin bestehen, dass die Abtastzeit etwa zu einem Achtel der in der Regelstrecke kleinsten vorkommenden Zeitkonstanten gewählt wird.

Der analoge Regler wird in einen diskreten Regelalgorithmus umgesetzt. Die Reglerkonstanten wie die Proportionalverstärkung Kp oder die Nachstellzeit Tn eines PI-Reglers müssen dabei in die Koeffizienten einer Differenzengleichung umgesetzt werden. Die neben der Zeitquantisierung in einem digitalen System auftretende Amplitudenquantisierung spielt nur eine untergeordnete Rolle, da die Berechnung im 32Bit-Gleikommaformat erfolgt.

Hinsichtlich der Stellungsregelkreise gilt folgende Ergänzung. Für eine digitale Verwirklichung der Betriebsregler wird mindestens eine Zykluszeit von 10 ms benötigt, um die Dynamik des D-Anteils zu erhalten. Der Regler für den elektrohydraulischen Hilfskanal entfällt und braucht nicht weiter betrachtet zu werden.

### Bezugszeichenliste

- 2: Turbinenstellventil
- 4: Unterstellventil

## Patentansprüche

1. Verfahren zur Steuerung eines Leichtwasserreaktors, der einen Reaktordruckbehälter und eine damit gekoppelte Dampfturbine mit einer Umleitstation aufweist, bei dem eine Stellgröße für die steuerbare Umleitstation aus dem Druck innerhalb des Radraumes der Dampfturbine gebildet wird.

2. Verfahren nach Anspruch 1, **gekennzeichnet durch** eine Erfassung der Druckverhältnisse im Radraum zur Bildung einer Stellgröße für die steuerbare Umleitstation.

3. Verfahren nach Anspruch 1 oder 2, **dadurch gekennzeichnet, dass** für die Umleitregelung als Eingangsgröße ein Druckistwert innerhalb des Radraums verwendet wird, wobei der Reaktordruck in zwei gekoppelten Regelkreisen geregelt wird.

4. Verfahren nach Anspruch 3, **dadurch gekennzeichnet, dass** ein Ventilöffnungswert innerhalb der Umleitregelung aus dem vom Reaktordruck und aus dem gemessenen Druck innhalb des Radraums gebildeten Regelgröße ermittelt wird.

5. Verfahren nach Anspruch 4, **dadurch gekennzeichnet, dass** aus dem Reaktordruck als Eingangsgröße und dem gemessenen Druck als Regelgröße innerhalb eines ersten Regelkreises mittels eines Reaktordruckreglers mit PI-Charakteristik ein geregelter Wert für eine Ventilöffnungsstellung errechnet wird.

6. Verfahren nach Anspruch 5, **dadurch gekennzeichnet, dass** dem Reaktordruckregler ein Zeitkorrekturglied mit P-T-Charakteristik nachgeordnet ist.

7. Verfahren nach einem der Ansprüche 4 bis 6, **dadurch gekennzeichnet, dass** neben dem Wert für die Ventilöffnungsstellung als weitere Eingangsgröße der Druck im Radraum genommen wird.

8. Leichtwasserreaktor mit einem Reaktordruckbehälter und einer damit gekoppelten Dampfturbine, und mit einer Umleitstation, **gekennzeichnet durch** eine Steuerung, die eine Koppelung zwischen einem Druck innerhalb des Radraumes und einem Einstellwert für die steuerbare Umleitstation aufweist.

9. Leichtwasserreaktor nach Anspruch 8, der mit einem Verfahren nach einem der Ansprüche 1 bis 8 betreibbar ist.
